# DEMANDE DE BREVET EUROPEEN

(11) **EP 0 811 526 A1**
(43) Date de publication de la demande: **10.12.1997**
(21) Numéro de dépôt: 97401266.8
(22) Date de dépôt: 05.06.1997
(51) Int. Cl.: B60P 3/077

(54) **Système d'immobilisation d'un véhicule automobile sur une plate-forme de transport**

(30) Priorité: 05.06.1996 FR 9606917
(71) Demandeur: France Manche S.A., 75770 Paris Cedex 16 (FR)
(72) Inventeur: Herold, Dominique, 62370 Zutkerque (FR)
(74) Mandataire: Doireau, Marc

(57) **Abrégé**

Système d'immobilisation d'un véhicule automobile sur un chemin de roulement (3) d'une plate-forme de transport(1), ce système comprenant des cales (10, 12) destinées à immobiliser en position les deux roues directrices (R1, R2) du véhicule. Ce système est caractérisé en ce que les cales (10, 12) sont fixes, situées en dehors du chemin de roulement (3) et destinées à coopérer respectivement avec les roues directrices (R1, R2) du véhicule après braquage de ces dernières.

## Description

La présente invention concerne un système d'immobilisation d'un véhicule automobile sur une plate-forme de transport, notamment ferroviaire, ainsi qu'une plate-forme de transport équipée d'un tel système d'immobilisation.

Dans le domaine ferroviaire, les véhicules automobiles accèdent par une rampe d'accès à un chemin de roulement défini sur le plancher d'une plate-forme constituée par un wagon. Après arrêt du véhicule automobile, son immobilisation est assurée au moyen de cales qui sont rapportées individuellement sur le chemin de roulement, positionnées devant et derrière les roues d'au moins l'un des trains de roues du véhicule, puis fixées sur le plancher du wagon.

Un tel système d'immobilisation malgré sa simplicité apparente n'est pas sans présenter des inconvénients.

En effet, le positionnement des cales requiert plusieurs opérations manuelles qui sont relativement longues à exécuter et qui peuvent être la source d'accidents. En outre, le stockage des cales avant et après leur utilisation n'est pas sans poser un problème.

Le but de l'invention est de proposer un système d'immobilisation d'un véhicule automobile sur une plate-forme de transport, qui pallie les inconvénients précités tout en procurant d'autres avantages.

A cet effet, l'invention propose un système d'immobilisation d'un véhicule automobile sur un chemin de roulement d'une plate-forme de transport, notamment ferroviaire, ce système comprenant des cales destinées à immobiliser en position les deux roues directrices du véhicule, système qui est caractérisé en ce que les cales sont fixes, situées en dehors du chemin de roulement et destinées à coopérer respectivement avec les roues directrices du véhicule après braquage de ces dernières.

Selon une autre caractéristique de l'invention, le système d'immobilisation comprend au moins une cale avant et une cale arrière qui sont disposées respectivement de part et d'autre du chemin de roulement, et positionnées de manière telle qu'après braquage des deux roues directrices, la partie avant d'une roue soit sensiblement en regard de la cale avant et la partie arrière de l'autre roue soit sensiblement en regard de la cale arrière.

Pour tenir compte du fait que l'écart entre les roues directrices varie suivant le type des véhicules automobiles, le système prévoit avantageusement au moins une seconde cale arrière qui est décalée vers l'extérieur par rapport à la première cale arrière .

Autrement dit, l'immobilisation du véhicule est obtenue au moyen de la cale avant et de l'une de plusieurs cales arrière en fonction de l'écartement entre les deux roues directrices du véhicule.

Ainsi, avec un système d'immobilisation selon l'invention, ce ne sont pas les cales qui vont à la rencontre des roues du véhicule mais le contraire, et les deux cales qui immobilisent le véhicule automobile ne sont pas situées de part et d'autre d'une même roue mais coopèrent respectivement avec les deux roues directrices du véhicule.

Un tel système présente de nombreux avantages, parmi lesquels on peut notamment citer :
- une libre circulation des véhicules sur le chemin de roulement de la plate-forme, puisque les cales sont situées à l'extérieur de ce chemin de roulement,
- l'immobilisation du véhicule ne nécessite aucune intervention manuelle, seul un opérateur pouvant être utilisé pour guider le chauffeur du véhicule automobile pour obtenir un positionnement correct des roues directrices du véhicule par rapport aux cales avant de braquer lesdites roues, et
- aucun problème de stockage des cales avant et après leur utilisation, étant donné qu'elles sont solidaires de la plate-forme.

Dans le cadre de l'invention, les véhicules automobiles peuvent être aussi bien des véhicules de tourisme que des véhicules poids lourds.

L'invention trouve plus particulièrement une application dans le domaine ferroviaire pour le transport des poids lourds.

D'autres avantages, caractéristiques et détails de l'invention ressortiront de la description explicative qui va suivre faite en référence aux dessins annexés, donnés uniquement à titre d'exemple et dans lesquels :
- la figure 1 est une vue schématique pour illustrer le principe d'un système selon l'invention pour immobiliser un véhicule automobile,
- la figure 2 est une vue de côté schématique et partielle d'une plate-forme de transport ferroviaire équipée d'un système d'immobilisation selon l'invention,
- la figure 3 est une vue en perspective d'une cale avant du système d'immobilisation illustré à la figure 2,
- la figure 4 est une vue en coupe suivant la ligne IV-IV de la figure 3,
- la figure 5 est une vue en perspective des cales arrières du système d'immobilisation illustré à la figure 2,
- les figures 6 et 7 sont des vues en coupe partielle suivant les lignes VI-VI et VII-VII de la figure 5, respectivement, et
- les figures 9 à 12 illustrent schématiquement différentes positions des roues directrices du véhicule par rapport aux cales.

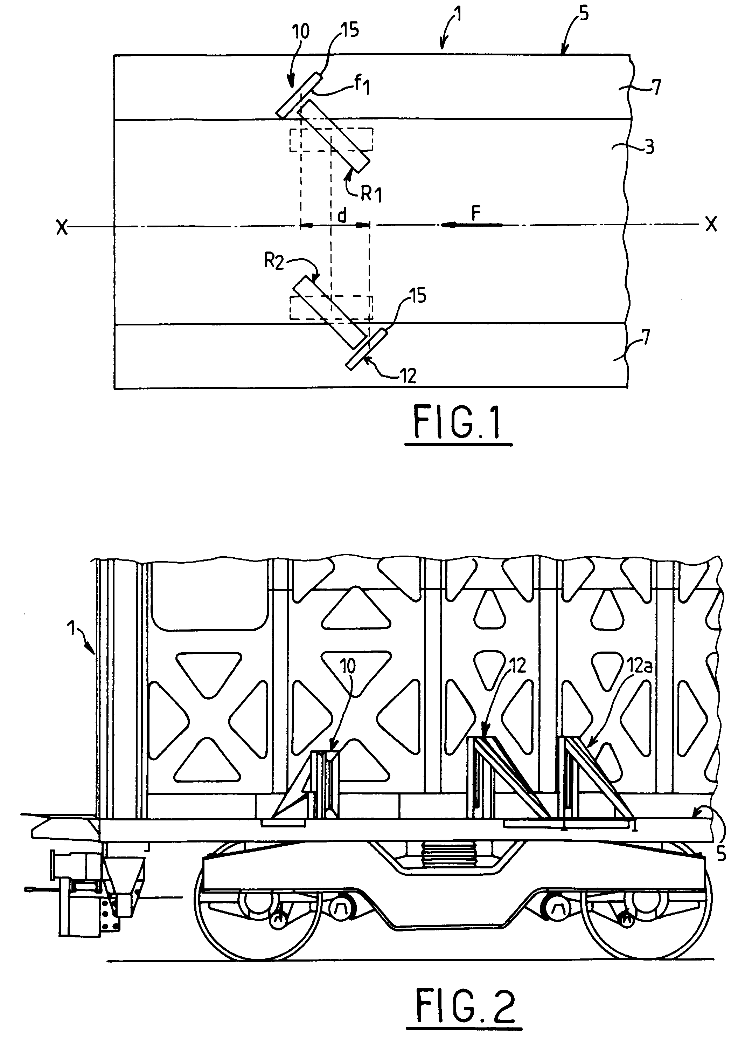

Le principe du système pour immobiliser un véhicule automobile sur une plate-forme de transport 1 est illustré sur la figure 1. On définit un chemin de roulement longitudinal 3 dans la partie centrale du plancher 5 de la plate-forme 1. Ce chemin 3 a bien évidemment une largeur qui est compatible avec le gabarit des véhicules à transporter. Deux couloirs latéraux 7 sont ainsi délimités de part et d'autre du chemin de roulement 3.

Le système d'immobilisation est constitué par au moins une cale avant 10 et une cale arrière 12, sachant que les adjectifs avant et arrière se définissent par rapport au sens de déplacement du véhicule qui est indiqué par la flèche F sur l'axe longitudinal X-X du chemin de roulement 3.

D'une manière générale, chaque cale 10, 12 est globalement constituée par un cadre métallique 15. Le cadre 15 est en saillie à la surface du plancher 5 de manière à s'étendre dans un plan vertical et sur une hauteur qui correspond sensiblement aux rayons des roues du véhicule à immobiliser. Le cadre 15 présente deux faces principales opposées, l'une des faces fl étant destinée à être en regard d'une roue directrice du véhicule à immobiliser.

Les deux cales avant 10 et arrière 12 sont fixes, situées en dehors du chemin de roulement 3 et destinées à coopérer respectivement avec les deux roues directrices R1 et R2 du véhicule à immobiliser.

Plus précisément, les deux cales avant 10 et arrière 12 sont respectivement situées au niveau des deux couloirs latéraux 7, orientées suivant un angle déterminé par rapport à l'axe longitudinal X-X du chemin de roulement 3 et fixées sur le plancher 5, de manière à ce que, après braquage des roues R1 et R2 en direction de la cale avant 10 :
- la partie avant de la roue R1 soit sensiblement en regard de la cale avant 10, et
- la partie arrière de la roue R2 soit sensiblement en regard de la cale arrière 12.

Les deux cales avant 10 et arrière 12 sont par conséquent décalées l'une par rapport à l'autre suivant l'axe X-X du chemin de roulement 3 d'une distance d qui correspond sensiblement au diamètre des roues directrices R1 et R2.

Cependant, pour tenir compte du fait que l'écartement des roues directrices R1 et R2 peut varier suivant le type des véhicules, on prévoit avantageusement au moins une seconde cale arrière 12a. Cette seconde cale 12a est située en arrière de la première cale 12 et est légèrement décalée vers l'extérieur.

Une plate-forme de transport du type ferroviaire équipée d'un tel système d'immobilisation est illustrée sur la figure 2, cette plate-forme 1 étant constituée par un wagon. Les cales avant 10 et arrière 12, 12a sont clairement visibles sur cette figure 2.

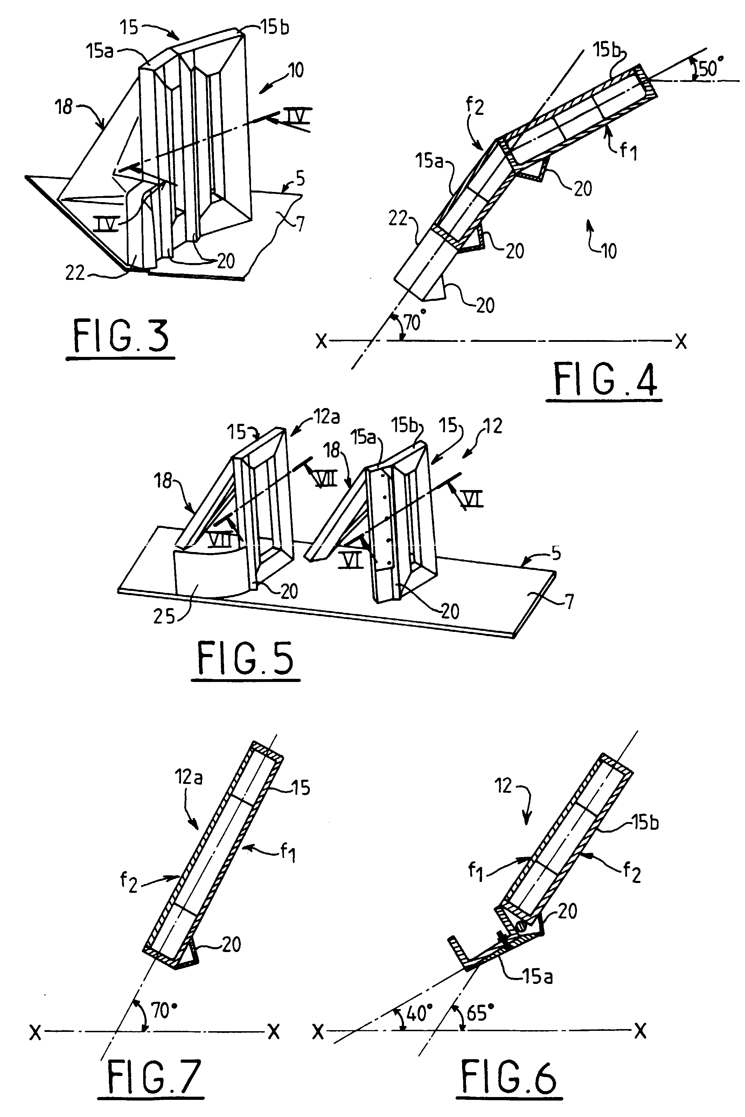

Les figures 3 et 4 montrent en détail la cale avant 10 de la figure 2. Le cadre 15 de cette cale avant 10 se décompose en deux cadres respectivement principal 15a et secondaire 15b. Ces deux cadres 15a et 15b sont juxtaposés l'un à l'autre mais avec une orientation angulaire différente par rapport à l'axe X-X du chemin de roulement 3.

Le cadre principal 15a, qui est adjacent au chemin de roulement 3, fait un angle de l'ordre de 70° par rapport à l'axe X-X, alors que le cadre secondaire 15b, qui prolonge vers l'extérieur le cadre principal 15a, fait un angle de l'ordre de 50° par rapport à l'axe X-X.

La cale avant 10 présente ainsi une face avant fl formée par les deux faces avant des deux cadres 15a et 15b, et une face arrière f2 formée par les deux faces arrière des deux cadres 15a et 15b. Une ossature de renfort 18 est prévue au niveau de la face arrière f2 de la cale avant 10, cette ossature 18 étant également utilisée pour assurer la fixation de la cale par des moyens appropriés sur le plancher 5 de la plate-forme 1. Chacun des deux cadres 15a et 15b de la cale avant 10 comporte au moins un accroche-roue 20 constituée par une nervure verticale en forme de dent qui s'étend sensiblement sur toute la hauteur des cadres 15a et 15b.

Dans cet exemple, la cale avant 10 est complétée par un cadre 22 de hauteur réduite qui prolonge le cadre principal 15a. Ce cadre 22 constitue un faux-trottoir, et il comporte également une nervure verticale 20.

Les figures 5 à 7 montrent en détail les cales arrière 12 et 12a de la figure 2. Le cadre 15 de la première cale arrière 12 se décompose également en deux cadres respectivement principal 15a et secondaire 15b. Les deux cadres 15a et 15b sont juxtaposés l'un à l'autre avec une orientation angulaire différente par rapport à l'axe X-X du chemin de roulement 3.

Le cadre principal 15a, qui est adjacent au chemin de roulement 3, fait un angle de l'ordre de 40° par rapport à l'axe X-X, alors que le cadre secondaire 15b, qui prolonge vers l'extérieur le cadre principal 15a, fait un angle de l'ordre de 65° par rapport à l'axe X-X.

La première cale arrière 12 présente ainsi une face avant f1 formée par les deux faces avant des deux cadres 15a et 15b, et une face arrière f2 formée par les deux faces arrière des deux cadres 15a et 15b. Une ossature de renfort 18 est prévue sur la face arrière f2 de la première cale arrière 12 et sert également à fixer la cale sur le plancher 5 de la plate-forme 1.

Comme cela est visible sur la figure 6, les deux cadres 15a et 15b peuvent être constitués de deux pièces distinctes. Un accroche-roue 20 du type précité est prévu entre les deux cadres 15a et 15b.

La seconde cale arrière 12a est constituée par un seul cadre 15 qui est orienté suivant un angle de l'ordre de 70° par rapport à l'axe X-X du chemin de roulement 3. Le cadre 15 comporte au moins un accroche-roue 20 situé le long de son bord vertical qui est adjacent au chemin de roulement 3. Avantageusement, cette seconde cale 12a se prolonge vers l'arrière par un faux-trottoir 25.

Ainsi, avec un système d'immobilisation selon l'invention, les véhicules automobiles peuvent circuler librement sur le chemin de roulement 3 de la plate-forme 1. Ensuite, une fois que chaque véhicule s'est arrêté avec ses roues directrices R1 et R2 positionnées entre une cale avant 10 et une cale arrière 12 ou 12a, il suffit de braquer les roues directrices R1 et R2 en direction des cales pour pouvoir assurer l'immobilisation du véhicule sans aucune intervention manuelle. En cas de freinage, soit la roue directrice R1 vient tout naturellement se bloquer contre la cale avant 10, soit la roue directrice R2 vient tout naturellement se bloquer contre la cale arrière 12 ou 12a en fonction du gabarit du véhicule.

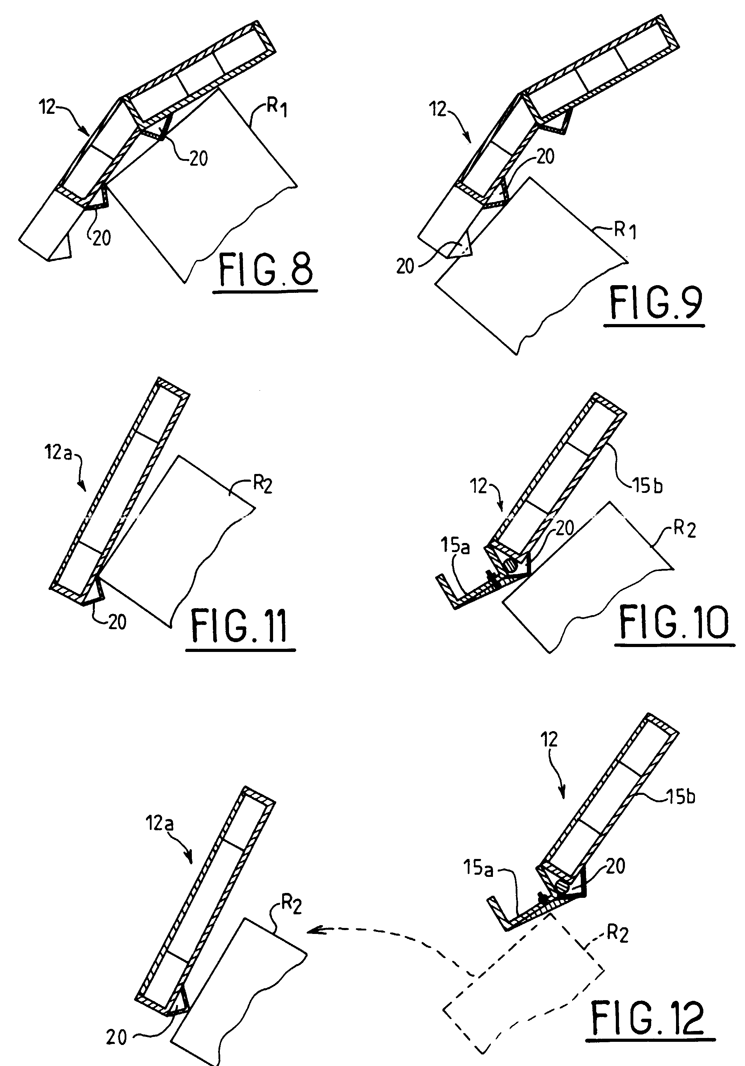

Sur la figure 8, on a illustré schématiquement le positionnement idéal de la roue directrice R1 sur la cale avant 10 suite à un freinage qui provoque le déplacement du véhicule en direction de ladite cale 10. Les accroche-roues 20 servent à immobiliser la roue R1 contre la cale 10. Bien entendu, ce positionnement idéal de la roue directrice R1 ne peut pas être garanti d'une manière sûre et répétitive. Cependant, les cales peuvent néanmoins assurer leur fonction, notamment grâce à la présence des accroche-roues 20, lorsqu'un positionnement idéal n'est pas obtenu, comme cela est schématiquement illustré sur la figure 9 pour la cale avant 10.

Sur la figure 10, on a illustré schématiquement le positionnement idéal de la roue directrice R2 sur la première cale arrière 12 suite à un freinage qui provoque le déplacement du véhicule en direction de ladite cale 12. L'accroche-roue 20 sert également à immobiliser la roue R2 contre la cale arrière 12. Bien entendu, la roue directrice R2 reste correctement positionnée dès l'instant où cette roue R2 est en appui sur l'accroche-roue 20 de la cale 12. Sur la figure 11, on a illustré schématiquement le positionnement idéal de la roue directrice R2 sur la deuxième cale arrière 12a. La roue directrice R2 est destinée à venir en appui soit contre la première cale 12 soit contre la seconde cale 12a en fonction du gabarit du véhicule.

Par contre, lorsque la roue directrice R2 d'un véhicule n'est pas correctement positionnée par rapport à la première cale arrière 12 contre laquelle la roue R2 devrait normalement venir en appui en cas de freinage, le cadre 15a de la cale 12 agit alors comme déflecteur pour faire riper la roue R2 en direction de la seconde cale arrière 12a contre laquelle la roue R2 viendra s'immobiliser. Cette situation est schématiquement illustrée sur la figure 12.

Dans les exemples qui ont été décrits précédemment, les cales ont été considérées comme étant fixes. Bien entendu, ces cales tout en restant fixes pourraient être montées de manière à pouvoir être réglables en position. Les angles d'orientation des cales 10, 12 et 12a sont définis à partir des gabarits des véhicules et des angles de braquage des roues directrices R1 et R2 de ces véhicules.

## Revendications

1. Système d'immobilisation d'un véhicule automobile sur un chemin de roulement (3) d'une plate-forme de transport (1), notamment ferroviaire, ce système comprenant des cales (10, 12) destinées à immobiliser en position les deux roues directrices (R1, R2) du véhicule, caractérisé en ce que les cales (10; 12, 12a) sont fixes, situées en dehors du chemin de roulement (3) et destinées à coopérer respectivement avec les deux roues directrices (R1, R2) du véhicule après braquage de ces dernières.

2. Système d'immobilisation selon la revendication 1, caractérisé en ce qu'il comprend au moins une cale avant (10) et une cale arrière (12, 12a) qui sont disposées respectivement de part et d'autre du chemin de roulement (3), et positionnées de manière telle qu'après braquage des deux roues directrices (R1, R2), la partie avant d'une roue directrice (R1) soit sensiblement en regard de la cale avant (10) et la partie arrière de l'autre roue directrice (R2) soit sensiblement en regard de la cale arrière (12).

3. Système d'immobilisation selon la revendication 2, caractérisé en ce que les cales avant (10) et arrière (12) sont axialement décalées suivant l'axe (X-X) du chemin de roulement (3) d'une distance correspondant sensiblement au diamètre des roues directrices (R1, R2).

4. Système d'immobilisation selon l'une des revendications précédentes, caractérisé en ce que chaque cale (10; 12, 12a) comprend au moins un accroche-roue (20) destiné à immobiliser la roue directrice (R1) contre la cale avant (10) ou immobiliser la roue directrice (R2) contre une cale arrière (12, 12a).

5. Système d'immobilisation selon la revendication 4, caractérisé en ce que chaque accroche-roue (20) est constitué par une nervure s'étendant sensiblement sur toute la hauteur de chaque cale (10; 12, 12a).

6. Système d'immobilisation selon l'une quelconque des revendications précédentes, caractérisé en ce que chaque cale (10; 12, 12a) est constituée par un cadre métallique (15) dont une face (fl) est destinée à être en regard d'une roue directrice (R1, R2) après braquage de cette dernière.

7. Système d'immobilisation selon la revendication 6, caractérisé en ce que chaque cadre (15) de la cale avant (10) et de la première cale arrière (12) est scindé en deux cadres (15a, 15b) orientés suivant un angle déterminé par rapport à l'axe longitudinal (X-X) du chemin de roulement (3).

8. Système d'immobilisation selon l'une quelconque des revendications précédentes, caractérisé en ce que les cales (10; 12, 12a) sont réglables en position.
